# EUROPÄISCHE PATENTSCHRIFT

(11) **EP 3 811 105 B1**
(45) Veröffentlichungstag und Bekanntmachung des Hinweises auf die Patenterteilung: **12.08.2026**
(21) Anmeldenummer: 19722545.1
(22) Anmeldetag: 27.04.2019
(51) Int. Cl.: G01S 7/40, G01S 13/44, G01S 13/931, G01S 7/02, H04B 17/12, H04B 17/21, G01S 13/34, G01S 13/32

(54) **VERFAHREN ZUR KALIBRIERUNG EINES MIMO-RADARSENSORS FÜR KRAFTFAHRZEUGE**
METHOD FOR CALIBRATING A MIMO RADAR SENSOR FOR MOTOR VEHICLES
PROCÉDÉ D'ÉTALONNAGE DE PHASE D'UN CAPTEUR RADAR MIMO POUR VÉHICULES AUTOMOBILES

(30) Priorität: 21.06.2018 DE 102018210070
(43) Veröffentlichungstag der Anmeldung: 28.04.2021
(73) Patentinhaber: Robert Bosch GmbH, 70442 Stuttgart (DE)
(72) Erfinder: LOESCH, Benedikt, 70195 Stuttgart (DE)
(86) Internationale Anmeldenummer: PCT/EP2019/060831
(87) Internationale Veröffentlichungsnummer: WO 2019/242913

(56) Entgegenhaltungen:
- DE-A1- 102014 208 899
- US-A1- 2016 146 931

## Beschreibung

Die Erfindung betrifft ein Verfahren zur Phasenkalibrierung eines MIMO-Radarsensors mit einem Array aus mehreren Sende- und Empfangs-Antennenelementen die in mindestens einer Richtung gegeneinander versetzt sind, und mit mehreren Hochfrequenzbausteinen, die jeweils einem Teil des Arrays zugeordnet sind, wobei die Phasenkalibrierung eine Korrektur von Phasendiffernzen der Hochfrequenzbausteine einschließt.

### Stand der Technik

Ein MIMO-Radarsensor mit mehreren Hochfrequenzbausteinen ist aus US 2016/146931 A1 bekannt.

In Fahrerassistenzsystemen für Kraftfahrzeuge, beispielsweise in Systemen zur automatischen Abstandsregelung oder in Kollisionswarnsystemen, werden häufig Radarsensoren zur Erfassung des Verkehrsumfelds eingesetzt. Neben dem Abstand und der Relativgeschwindigkeit ist in der Regel auch der Azimutwinkel der georteten Objekte von Bedeutung, da beispielsweise bei der Ortung von vorausfahrenden Fahrzeugen anhand des Azimutwinkels eine Fahrspurzuordnung ermöglicht wird. Auch der Elevationswinkel der georteten Objekte kann von Bedeutung sein, da er eine Aussage über die Relevanz des Ziels erlaubt, beispielsweise ob das Ziel überfahrbar oder unterfahrbar ist oder ein potentiell kollisionsgefährdendes Hindernis darstellt.

Azimut- und Elevationswinkel der Ziele können aus Amplituden und/oder Phasenunterschieden von Sende- und/oder Empfangsantennen des Antennenarrays ermittelt werden. Um die Genauigkeit und Trennfähigkeit der Winkelschätzung zu verbessern, können Radarsensoren eingesetzt werden, die nach dem MIMO-Prinzip (Multiple Input Multiple Output) arbeiten. Dabei werden anders als bei klassischen SIMO-Radarsensoren (Single Input Multiple Output), die mit einer Sendeantenne und mehreren Empfangsantennen arbeiten, mehrere Sende-Antennenelemente und mehrere Empfangs-Antennenelemente verwendet. Um die Signale der Sende-Antennenelemente an den Empfangs-Antennenelementen trennen zu können, müssen die Sendesignale unkorreliert (orthogonal) sein. Das kann über Zeit-, Frequenz- oder Codemultiplex erreicht werden.

Bei der Winkelschätzung werden die Empfangssignale mit einem vorher vermessenen winkelabhängigen Antennendiagramm verglichen. Für den Fall, dass nur ein einziges Ziel geortet wird (oder mehrere Ziele, die sich jedoch anhand des Abstands und der Relativgeschwindigkeit klar voneinander unterscheiden lassen), ergibt sich der geschätzte Winkel als Position der besten Übereinstimmung zwischen dem Empfangssignal und dem Antennendiagramm. Für den allgemeinen Fall der Mehrzielschätzung sind spezielle Schätzalgorithmen bekannt, die Schätzwerte für die Ortungswinkel aller beteiligten Ziele liefern.

Bisher ist es üblich, die Antennendiagramme für jeden einzelnen Sensor werkseitig vor Inbetriebnahme des Sensors zu vermessen. Wenn der Radarsensor in einem Kraftfahrzeug verbaut wird, beispielsweise hinter einem Stossfänger oder hinter einer Reliefstruktur wie beispielsweise einem Emblem der Kraftfahrzeugmarke, so kann es zu Verfälschungen des Antennendiagramms kommen, die systematische Fehler bei der Winkelschätzung verursachen. Das gilt insbesondere für die Sende-Antennendiagramme bei MIMO-Radarsensoren.

Aus DE 2014 208 899 A1 ist ein alternatives Verfahren bekannt, das eine Kalibrierung oder Nachkalibrierung eines Antennendiagramms eines MIMO-Radarsensors mit Nₜₓ Sende-Antennenelementen und Nᵣₓ Empfangs-Antennenelementen auch noch nach Inbetriebnahme des Radarsensors ermöglicht.

Dieses Verfahren umfasst die folgenden Schritte:
vor Inbetriebnahme des Radarsensors:
   - Speichern eines Antennendiagramms, das jedem von mehreren Winkeln θ einen jeweiligen Steuerungsvektor a(θ) zuordnet, der sich zusammensetzt aus einem Sende-Steuerungsvektor aₜₓ(θ) und einem Empfangs-Steuerungsvektor aᵣₓ(θ),
nach Inbetriebnahme:
   - Ausführen einer Radarmessung zur Ortung eines Objekts,
   - Prüfen, ob das geortete Objekt ein Einzelziel oder ein Mehrfachziel ist,
   - wenn es ein Einzelziel ist:
      - Ausführen einer SIMO-Messung mit jedem der Sende-Antennenelemente,
      - Schätzen des Winkels θ des Objekts anhand der Messergebnisse,
      - Berechnen einer ersten, von den Komponenten des Sende-Steuerungsvektors aₜₓ(θ) abhängigen Vergleichsgröße für jedes Sende-Antennenelement,
      - Berechnen einer zweiten, von den Ergebnissen der SIMO-Messungen abhängigen Vergleichsgröße für jedes Sende-Antennenelement, und
      - Korrigieren des Sende-Steuerungsvektors aₜₓ(θ) anhand einer bekannten Beziehung zwischen den ersten und zweiten Vergleichsgrößen für jedes Sende-Antennenelement.

Dieses Verfahren hat den Vorteil, dass Störeinflüsse, die sich erst beim Verbau des Radarsensors im Fahrzeug ergeben und deshalb bei der werkseitigen Kalibrierung noch nicht erfasst werden können, nachträglich kompensiert werden können. Wenn beispielsweise während der Fahrt mit dem Kraftfahrzeug, in dem der Radarsensor verbaut ist, ein einzelnes Objekt unter einem bestimmten Azimutwinkel θ geortet wird, so kann anhand des oben beschriebenen Verfahrens das Sende-Antennendiagramm für diesen speziellen Azimutwinkel nachkalibriert werden. Da beim Betrieb des Kraftfahrzeugs im Laufe der Zeit Einzelobjekte unter verschiedenen Azimutwinkeln θ geortet werden, erhält man so nach und nach ein korrigiertes (kalibriertes) Sende-Antennendiagram für den gesamten Azimutwinkelbereich. Die Kalibrierungsphase kann dann abgeschlossen werden. Wahlweise ist es jedoch auch möglich, die Nachkalibrierung ständig fortzusetzen oder in gewissen Intervallen zu wiederholen, um auch alterungsbedingten Änderungen des Antennendiagramms Rechnung zu tragen.

Bei dem oben beschriebenen Verfahren wird nur der Sende-Teil des Antennendiagramms kalibriert. Die genannte Veröffentlichung beschreibt jedoch auch ein analog ablaufendes Verfahren, bei dem mit Hilfe mehrerer MISO-Messungen (Multiple Input Single Output) der Empfangs-Teil des Antennendiagramms kalibriert wird.

In letzter Zeit besteht zunehmendes Interesse an Radarsensoren, die zur Erzeugung der Radarsignale und zum Empfang und zur Vorauswertung der Radarechos zwei oder mehr im wesentlichen baugleiche Hochfrequenzbausteine aufweisen. Diese Bausteine lassen sich einerseits einzeln in Radarsensoren mit geringen Leistungsanforderungen verwenden, beispielsweise in Fahrerassistenzsystemen, und lassen sich andererseits zu mehreren zusammenschalten, um einen Radarsensor mit höherer Leistung, insbesondere mit höherer Winkeltrennfähigkeit zu schaffen. Allerdings ist es im letzteren Fall erforderlich, die verschiedenen Hochfrequenzbausteine präzise miteinander zu synchronisieren, um Fehler aufgrund von Phasendifferenzen in den Empfangsteilen und/oder den Sendeteilen der verschiedenen Hochfrequenzbausteine zu vermeiden.

Bekannte Lösungsansätze sehen z.B. den Einsatz eines Zentralen Oszillators oder Master/Slave-Architekturen vor, jeweils in Verbindung mit einem genauen Abgleich der Signallaufwege. Diese Lösungen sind jedoch relativ aufwendig.

Außerdem besteht bei Radarsensoren mit mehreren Hochfrequenzbausteinen das Problem, dass die Hochfrequenzbausteine notwendigerweise in gewissem räumlichen Abstand zu einander angeordnet sein müssen, und deshalb in unterschiedlicher Weise mit der jeweiligen Einbauumgebung interagieren und/oder, z.B. aufgrund der Wärmeentwicklung im Radarsensor, unterschiedliche Temperaturen haben können. Temperaturänderungen während des Betrieb des Radarsensors können deshalb aufgrund des Temperaturgangs der beteiligten elektronischen Komponenten zu Phasendifferenzen führen, die die Genauigkeit der Kalibrierung beeinträchtigen. Diese Faktoren sind bei einer einmaligen werkseitigen Kalibrierung des Radarsensors kaum vorherzusehen und deshalb nur schwer zu beherrschen.

Aufgabe der Erfindung ist es, ein Verfahren anzugeben, das es erlaubt, die mehreren Hochfrequenzbausteine eines Radarsensors "online", also bei laufendem Betrieb des Radarsensors nachzukalibrieren.

Diese Aufgabe wird erfindungsgemäß mit den in den unabhängigen Ansprüchen angegebenen Merkmalen gelöst.

Der Lösungsgedanke besteht im Kern darin, dass das Array der Sende- und Empfangsantennen so in Sende-Subarrays und Empfangs-Subarrays unterteilt wird, dass jedes Subarray genau einem der Hochfrequenzbausteine zugeordnet ist und mindestens zwei Empfangs-Subarrays in einer Richtung gegeneinander versetzt und in der dazu senkrechten Richtung miteinander ausgerichtet sind, und dass man dann die eingangs beschriebenen Verfahren zur Kalibrierung der Antennendiagramme analog auf der Ebene der Subarrays anwendet, wobei jedes Subarray wie ein einzelnes Antennenelement behandelt wird. Bei Subarrays, die zu verschiedenen Hochfrequenzbausteinen gehören, werden dann durch die Kalibrierung automatisch auch die Phasenfehler korrigiert, die durch die Asynchronität der Bausteine verursacht werden.

Vorteilhafte Weiterbildungen und Ausgestaltungen der Erfindung sind in den Unteransprüchen angegeben.

Das Verfahren kann sowohl bei der Winkelschätzung im Azimut als auch bei einer Winkelschätzung in Elevation angewandt werden. Wenn zwei oder mehr Subarrays, die zu verschiedenen Hochfrequenzbausteinen gehören, in horizontaler Richtung gegeneinander versetzt sind, so können die zugehörigen Hochfrequenzbausteine mit Hilfe einer Winkelschätzung für den Azimutwinkel kalibriert werden. Sind dagegen zwei oder mehr Subarrays, die zu verschiedenen Hochfrequenzbausteinen gehören, vertikal gegeneinander versetzt, so lassen sich die zugehörigen Hochfrequenzbausteine mit Hilfe einer Winkelschätzung in Elevation kalibrieren.

Gegenstand der Erfindung ist außerdem ein Radarsensor für Kraftfahrzeuge, in dem eines der oben beschriebenen Verfahren implementiert ist.

Im Folgenden wird ein Ausführungsbeispiel anhand der Zeichnung näher erläutert.

Es zeigen:
- Fig. 1: eine Prinzipskizze eines Radarsensors, bei dem die Erfindung anwendbar ist;
- Fig. 2: ein Diagramm eines MIMO-Radarsensors mit zwei Sende-Antennenelementen und vier Empfangs-Antennenelementen;
- Fig. 3: ein Diagramm des Radarsensors nach Fig. 2, nach Verbau in einem Kraftfahrzeug und während der Ortung eines Objekts;
- Fig. 4: ein Flussdiagramm eines Verfahrens zur Kalibrierung des Radarsensors nach Fig. 1.

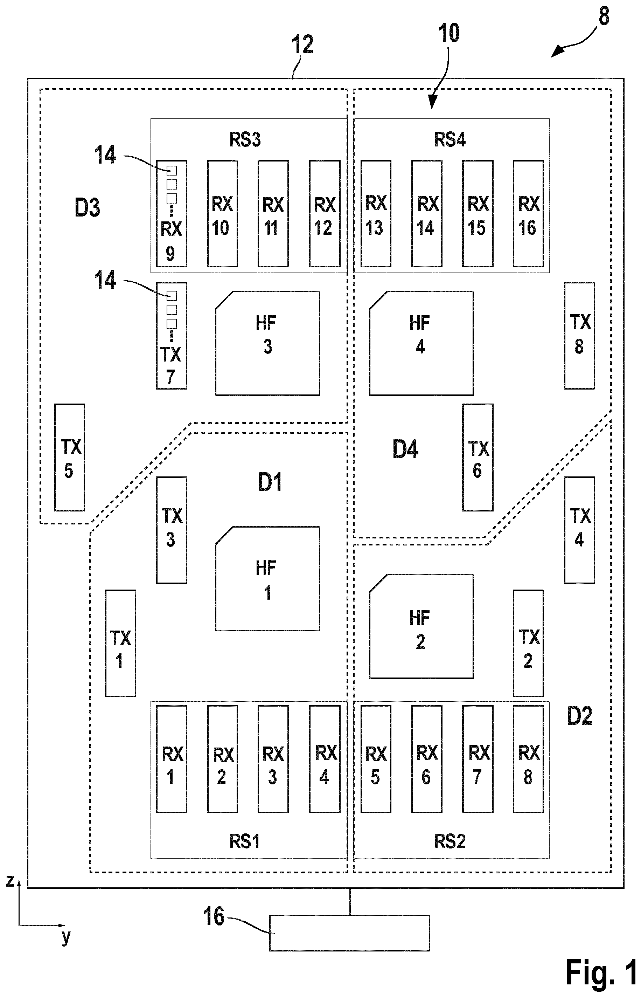

Der in Fig. 1 gezeigte Radarsensor 8 weist ein Array 10 aus Sende- und Empfangsantennen sowie vier baugleiche Hochfrequenzbausteine HF1-HF4 auf, die auf einer gemeinsamen Platine 12 angeordnet sind. Die Sende- und Empfangsantennen werden durch Antennenelemente 14 (Patches) gebildet, die in vertikalen Spalten angeordnet sind.

Das Array 10 ist im gezeigten Beispiel in vier Domänen D1-D4 aufgeteilt, denen jeweils einer der Hochfrequenzbausteine HF1-HF4 zugeordnet ist. Jeder Hochfrequenzbaustein stellt ein Sendesignal für die Sendeantennen seiner Domäne bereit und enthält, wie an sich bekannt und deshalb hier nicht gezeigt ist, eine Anzahl von Mischern, in denen jeweils die von einer Empfangsantenne empfangenen Signale mit einem Anteil des Sendesignals gemischt und so in ein Zwischenfrequenzband heruntergemischt werden, so dass sie dann in einer Auswerte- und Steuerschaltung 16 (in diesem Fall außerhalb der Platine 12) digitalisiert und weiterverarbeitet wird.

Jede der Domänen D1-D4 enthält eine Anzahl von Subarrays von Sende- und Empfangsantennen. Im gezeigten Beispiel enthält die Domäne D1 zwei Sende-Subarrays TX1, TX3 und ein Empfangs-Subarray RS1, die Domäne D2 enthält zwei Sende-Subarrays TX2, TX4 und ein Empfangs-Subarray RS2, die Domäne D3 enthält zwei Sende-Subarrays TX5, TX7 und ein Empfangs-Subarray RS3, und die Domäne D4 enthält zwei Sende-Subarrays TX6, TX8 und ein Empfangs-Subarray RS4. Jedes der Sende-Subarrays TX1-TX8 besteht im gezeigten Beispiel aus einer Spalte oder mehreren parallelen vertikal (in z-Richtung) verlaufender Spalten von Antennenelementen 14. Jedes der Empfangs-Subarrays RS1-RS4 besteht dagegen aus vier parallelen Spalten oder Sub-Subarrays RX1-RX4, RX5-RX8, RX9-RX12 bzw. RX13-RX16, die in zwei parallelen, horizontal (in y-Richtung) verlaufenden Zeilen angeordnet sind und innerhalb jeder Zeile gleichmäßige Abstände zueinander aufweisen.

Die Sende-Subarrays TX1-TX8 bilden vier Paare, die in z-Richtung gegeneinander und gegenüber den Empfangs-Subarrays RS1-RS4 versetzt sind. Dabei liegen die Sende-Subarrays jedes Paares in z-Richtung auf gleicher Höhe und weisen in y-Richtung einen Abstand zueinander auf, der größer ist als die Breiten (in y-Richtung) der Sende-Subarrays RS1 und RS2 (bzw. RS3 und RS4) zusammen.

Die mehrspaltigen Sende-Subarrays ermöglichen eine hochauflösende Winkelschätzung im Azimut. Nachdem MIMO-Prinzip können dabei Messungen mit unterschiedlichen Kombinationen von Sende- und Empfangs-Subarrays ausgeführt werden, beispielsweise indem abwechselnd mit den Sende-Subarrays TX1 und TX2 gesendet wird und die Empfangssignale aller acht Antennenspalten der Empfangs-Subarrays RS1 und RS2 ausgewertet werden. Da die Phasenbeziehungen zwischen den empfangenen Signalen von der Relativposition der Sende- und Empfangs-Subarrays in y-Richtung abhängig sind, erhält man so ein virtuelles Array, das mehr als doppelt so breit ist wie die beiden Empfangs-Subarrays RS1 und RS2 zusammen.

Der Versatz der Sende- und Empfangs-Subarrays in z-Richtung erlaubt nach dem gleichen Prinzip auch eine Winkelschätzung in Elevation.

Voraussetzung für erfolgreiche Winkelschätzungen ist jedoch, dass die Antennendiagramme, die die Phasenbeziehungen zwischen den empfangenen Signalen in Abhängigkeit vom Ortungswinkel des Objekts angeben, korrekt kalibriert sind.

Eine Komplikation ergibt sich bei dem hier gezeigten Radarsensor jedoch daraus, dass beispielsweise die Subarrays in den Domänen D1 und D2 von zwei verschiedenen Hochfrequenzbausteinen HF1 und HF2 gespeist werden, so dass die korrekte Kalibrierung des Antennendiagramms auch von einem möglichen Phasenoffset zwischen den Sende-Signalen der beiden Hochfrequenzbausteine HF1 und HF2 abhängig ist. Da dieser Phasenoffset sich während des Betriebs des Radarsensors ändern kann, beispielsweise aufgrund von Temperaturschwankungen in den Hochfrequenzbausteinen, reicht eine einmalige werkseitige Kalibrierung des Radarsensors nicht aus.

Gegenstand der hier beschriebenen Erfindung ist deshalb vor allem ein Verfahren, das es erlaubt, die Antennendiagramme während des Betriebs des Radarsensors so nachzukalibrieren, dass auch die Phasenoffsets zwischen den verschiedenen Hochfrequenzbausteinen HF1-HF4 korrekt berücksichtigt werden.

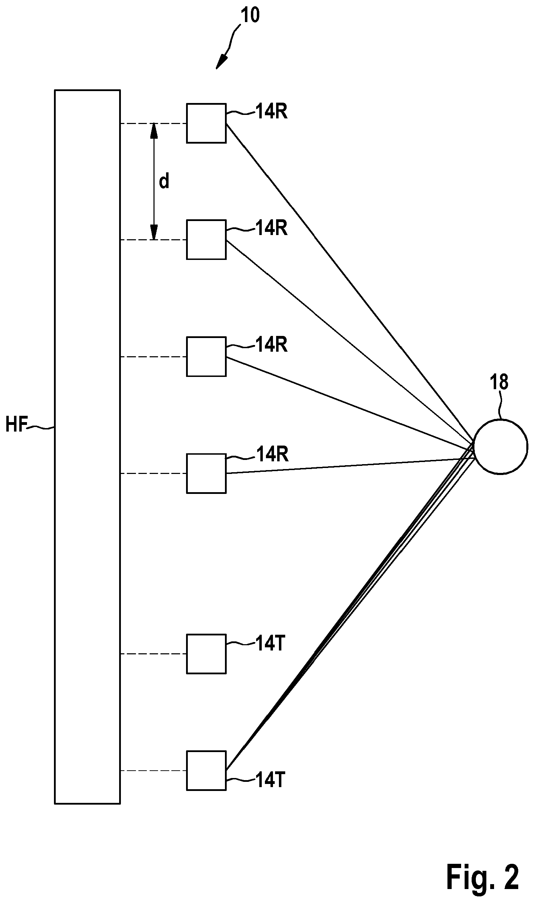

Zum leichteren Verständnis soll jedoch zunächst das Kalibrierverfahren für ein stark vereinfachtes Antennen-Array erläutert werden, das in Fig. 2 gezeigt ist.

In diesem Beispiel weist das Antennenarray nur zwei Sende-Antennenelemente 14T und vier Empfangs-Antennenelemente 14R auf. Die Sende-Antennenelemente 14T werden von einem Hochfrequenzbaustein HF mit angeschlossener Steuer- und Auswerteeinheit gespeist und emittieren Radarsignale, die an einem Objekt 18 reflektiert und von jedem der Empfangs-Antennenelemente 14R empfangen werden. Die empfangenen Signale werden in der Steuer- und Auswerteeinheit getrennt ausgewertet.

Lediglich aus Gründen der Übersichtlichkeit ist hier (wie auch in Fig. 1) ein bistatisches Antennensystem dargestellt worden, bei dem die Sende-Antennenelemente 14T von den Empfangs-Antennenelementen 14R verschieden sind. In der Praxis kann auch ein monostatisches Antennenkonzept benutzt werden, bei dem zum Senden und zum Empfangen die gleichen Antennenelemente benutzt werden.

In diesem Beispiel sind die Empfangs-Antennenelemente 14R in gleichmäßigen Abständen auf einer Geraden angeordnet (ULA; Uniform Linear Array). Das gleiche gilt auch für die Sende-Antennenelemente 14T, wobei die Sende- und Empfangs-Antennenelemente nicht notwendigerweise auf derselben Geraden angeordnet sein müssen.

Im gezeigten Beispiel wird der Radarsensor im Zeitmultiplex-Verfahren betrieben. Das heißt, dass zu jedem Zeitpunkt nur eines der Nₜₓ (= 2) Sende-Antennenelemente 14T aktiv ist. Die Aktivitätsphasen der einzelnen Antennenelemente wechseln einander zyklisch ab. In Fig. 2 ist symbolisch der Fall dargestellt, in dem nur das untere der beiden Sende-Antennenelemente 14T aktiv ist.

Alternativ könnte der Radarsensor auch im Frequenzmulitplex-Verfahren betrieben werden. Dann wären alle Sende-Antennenelemente 14T gleichzeitig aktiv, würden jedoch mit leicht verschiedenen Frequenzen arbeiten, so dass sich die Signale der verschiedenen Sende-Antennenelemente empfangsseitig wieder trennen lassen.

Eine weitere Möglichkeit wäre das Codemultiplex-Verfahren. Dabei wird dem von jedem der Sende-Antennenelemente 14T gesendeten Signal ein bestimmter Code aufmoduliert, und auf der Empfangsseite werden die Signale durch codeselektive Filterung voneinander getrennt.

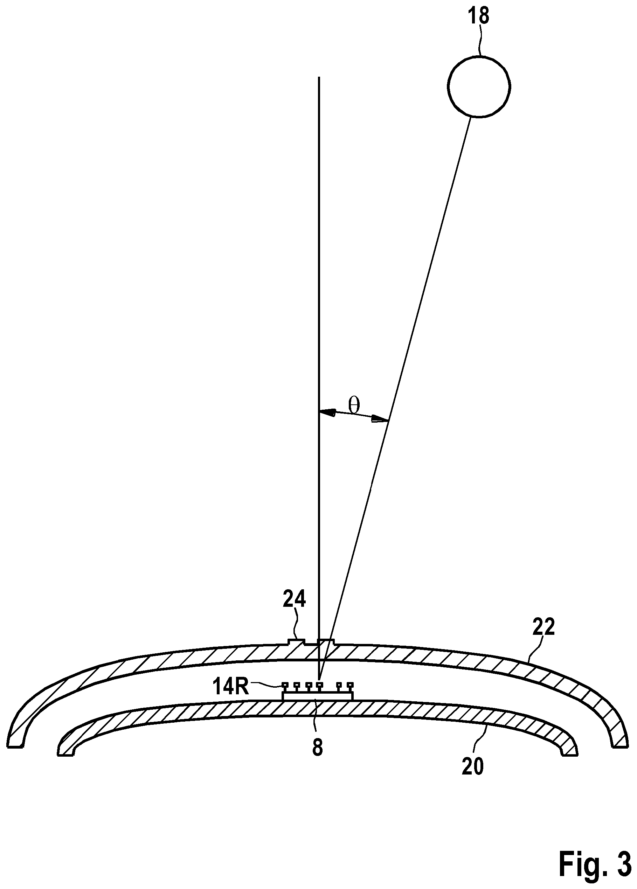

Im Folgenden soll zu Erläuterungszwecken das Zeitmultiplex-Verfahren betrachtet werden. In einem einfachen Signalmodell kann angenommen werden, dass das Objekt 18 ein punktförmiges Streuzentrum ist, an dem das von dem aktiven Sende-Antennenelement 14T emittierte Signal als Kugelwelle gestreut wird, die dann die verschiedenen Empfangs-Antennenelemente 14R erreicht. In Fig. 1 ist allerdings der Abstand zwischen dem Radarsensor und dem Objekt 18 unrealistisch klein. In der Praxis ist dieser Abstand so groß, dass die Abmessungen des Radarsensors 8 im Vergleich zum Objektabstand vernachlässigbar klein sind. Etwas realistischere Verhältnisse zeigt Fig. 3, wo sich das Objekt 18 in einem größeren Abstand vor der Frontpartie eines Kraftfahrzeugs 20 befindet, an welcher der Radarsensor 8 angeordnet ist. Die am Ort des Radarsensors einlaufenden Radarwellen können dann in guter Näherung als ebene Wellen betrachtet werden, die alle Empfangs-Antennenelemente 14R praktisch unter demselben Einfallswinkel, dem (Azimut-)Winkel θ des Objekts 18, erreichen.

Mit xn soll der vierkomponentige Vektor bezeichnet werden, dessen Komponenten (x_{n,1}, x_{n,2}, x_{n,3}, x_{n,4}) die komplexen Amplituden der Signale angeben, die von dem n-ten Sende-Antennenelement 14T gesendet werden und von den vier Empfangs-Antennenelementen 14R empfangen werden. Wenn d der Abstand von Antennenelement zu Antennenelement ist, λ die Wellenlänge der Radarstrahlung und s = x_{n,1} die (zeitabhängige) komplexe Amplitude des Signals ist, das von dem ersten der Empfangs-Antennenelemente 14R empfangen wird (beispielsweise dem am weitesten rechts gelegenen Antennenelement in Fig. 3), so gilt aufgrund der Lauflängenunterschiede zwischen den Signalen, die die verschiedenen Empfangs-Antennenelemente 14R erreichen, die folgende Beziehung: ${xn}_{¯} \left(θ\right) = s {\left(1, {e}^{- 2 πi \left(d/λ\right) sin \left(θ\right)}, {e}^{- 2 πi \left(2d/λ\right) sin \left(θ\right)}, {e}^{- 2 πi \left(3d/λ\right) sin \left(θ\right)},\right)}^{T} = s {{a}_{_}}_{rx} \left(θ\right)$

Das hochgestellte Symbol "T" soll die Transposition bezeichnen, da Vektoren hier als Zeilenvektoren geschrieben werden aber als Spaltenvektoren betrachtet werden sollen. Der Vektor aᵣₓ wird als Empfangs-Steuerungsvektor bezeichnet. Dieser Steuerungsvektor gibt die geometrischen Eigenschaften und Wellenausbreitungseigenschaften des jeweils betrachteten Empfangs-Antennenarrays an. Ein solcher Steuerungsvektor lässt sich nicht nur für ULA-Antennenarrays, sondern ganz allgemein auch für andere Antennenkonfigurationen definieren.

Entsprechend kann man auch für das Array der (in diesem Beispiel nur zwei) Sende- Antennenelemente 14T einen Steuerungsvektor aₜₓ definieren, der in diesem Beispiel im wesentlichen die Lauflängenunterschiede der optischen Pfade von den Sende-Antennenelementen zum Objekt 18 angeben würde.

Für das gesamte MIMO-Antennenarray erhält man den Steuerungsvektor ${a}_{_} \left(θ\right) = {{a}_{_}}_{tx} \left(θ\right) * {{a}_{_}}_{rx} \left(θ\right)$

Das Symbol * bedeutet hier das Kronecker-Produkt. Im hier betrachteten Beispielfall gilt also: ${a}_{_} \left(θ\right) = {\left(\begin{matrix}{a}_{tx , 1} {a}_{rx , 1} , {a}_{tx , 1} {a}_{rx , 2} , {a}_{tx , 1} {a}_{rx , 3} , {a}_{tx , 1} {a}_{rx , 4} , \\ {a}_{tx , 2} {a}_{rx , 1} , {a}_{tx , 2} {a}_{rx , 2} , {a}_{tx , 2} {a}_{rx , 3} , {a}_{tx , 2} {a}_{rx , 4}\end{matrix}\right)}^{T}$

Die empfangenen Signale bilden einen Vektor x mit Nₜₓ · Nᵣₓ Komponenten (8 Komponenten in diesem Beispiel), und es gilt ${x}_{_} \left(θ\right) = s a \left(θ\right)$

Die Kenntnis des Steuerungsvektors a(θ) erlaubt es, eine (unter geeigneten Bedingungen eindeutige) Beziehung zwischen dem Winkel θ des Objekts und den empfangenen Signalen x herzustellen und aus den Amplituden- und Phasenbeziehungen der empfangenen Signale auf den Azimutwinkel θ des Objekts zu schließen. Da in der Praxis die empfangenden Signale jedoch mehr oder weniger verrauscht sein werden, lässt sich der Azimutwinkel nicht exakt berechnen, sondern lediglich schätzen, beispielsweise mit Hilfe einer Maximum-Likelihood-Schätzung.

Wenn man dieses Prinzip auf Mehrzielschätzungen verallgemeinert, wird aus dem einzelnen Winkel θ ein Vektor θ, dessen Komponenten die Winkel der verschiedenen Ziele angeben, aus dem Steuerungsvektor a wird eine Steuerungsmatrix A, und es gilt die Beziehung ${x}_{_} = A {θ}_{_}$

Im Prinzip kann für einen gegebenen Radarsensor das Antennendiagramm, d.h. die Gesamtheit aller Steuerungsvektoren a(θ) für alle in Frage kommenden Azimutwinkel θ, vor Inbetriebnahme des Sensors vermessen werden. In dem in Fig. 3 gezeigten Beispiel ist jedoch der Radarsensor 10 hinter einem Stoßfänger 22 des Kraftfahrzeugs verbaut, und dieser Stoßfänger 22 weist zudem noch ein bestimmtes Relief 24 auf, beispielsweise weil ein Emblem der Kraftfahrzeugmarke eingeprägt oder herausgeprägt ist. Da die optische Dichte des Stoßfängers von der optischen Dichte der Luft verschieden ist, kommt es durch Brechung der Radarwellen am und im Stoßfänger 22 zu Lauflängenunterschieden, die einen Einfluss auf das Antennendiagramm haben. Dieser Einfluss ist vom genauen Einbauort des Radarsensors relativ zu dem Relief 24 abhängig und lässt sich deshalb nur schwer rechnerisch kompensieren, zumal auch Effekte wie z. B. eine Verschmutzung des Stossfängers das Antennendiagramm weiter verfälschen können. Es versteht sich, dass sich diese Probleme noch verschärfen, wenn das Antennenarray größere Abmessungen hat wie z.B. in Fig. 1.

Ziel ist es nun, das Antennendiagramm nachträglich, nach dem Einbau des Radarsensors in das Fahrzeug, so zu kalibrieren, dass solche Verfälschungen des Antennendiagramms nicht zu nennenswerten Fehlern bei der Winkelschätzung führen.

Zunächst soll eine Möglichkeit beschrieben werden, den Sende-Steuerungsvektor aₜₓ(θ) nachzukalibrieren. Dabei ist es zweckmäßig, relative Steuerungsvektoren a'ₜₓ(θ) und a'ᵣₓ(θ) zu definieren: ${{a ′}_{¯}}_{tx} \left(θ\right) : = {{a ′}_{¯}}_{tx} \left(θ\right) / {a}_{tx , 1} \left(θ\right)$ und ${{a ′}_{¯}}_{rx} \left(θ\right) : = {a}_{tx , 1} \left(θ\right) {{a}_{_}}_{rx} \left(θ\right)$ wegen Gleichung (2) gilt dann ${a}_{_} \left(θ\right) = {{a ′}_{¯}}_{tx} \left(θ\right) * {{a ′}_{¯}}_{rx} \left(θ\right)$ da sich der Faktor a'ₜₓ(θ) heraus kürzt. Eine Nachkalibrierung des relativen Sende-Steuerungsvektors a'ₜₓ(θ) ist deshalb zu einer Nachkalibrierung des ursprünglichen Sende-Steuerungsvektors aₜₓ(θ) äquivalent.

Die Qualität einer Winkelschätzung wird durch die sogenannte Gütefunktion q(θ) beschrieben. Diese Funktion ist ein Maß für die Wahrscheinlichkeit, dass die mit dem Schätzalgorithmus ermittelten Schätzwerte den tatsächlichen Winkelpositionen der georteten Objekte entsprechen. Für den allgemeinen Fall einer Mehrzielschätzung, bei der mehrere Ziele, die anhand ihrer Abstände und Relativgeschwindigkeiten nicht unterscheidbar sind, unter unterschiedlichen Winkeln θⱼ geortet werden, ist die Gütefunktion gegeben durch die Gleichung ${q}^{2} \left({θ}_{_}\right) = {{x}_{_}}^{H} {P}_{A} \left(θ\right) {x}_{_}$

Darin ist x der Vektor der mit den verschiedenen Kombinationen von Sende- und Empfangs-Antennenelementen erhaltenen Signale, x^{H} der hermitesch konjugierte Vektor zu x, und P_{A}(θ) = A(A^{H} A)⁻¹ A^{H}, wobei A die Steuerungsmatrix ist, die die Steuerungsvektoren aller Ziele enthält. Gegebenenfalls kann die Steuerungsmatrix auch mehrere Steuerungsvektoren für dasselbe Ziel enthalten, wenn aufgrund von Reflexionen an Leitplanken oder dergleichen mehrere optische Pfade von demselben Ziel zum Radarsensor führen.

Im Fall eines Einzelziels mit nur einem Pfad vereinfacht sich diese Gleichung zu ${q}^{2} \left(θ\right) = {\left|{{a}_{_}}^{H}\left(θ\right) {x}_{_}\right|}^{2} / \left({\left|{a}_{_}\left(θ\right)\right|}^{2} {\left|{x}_{_}\right|}^{2}\right)$

Der Steuerungsvektor a(θ) kann vor Inbetriebnahme des Radarsensors gemessen und normiert werden. Der Signalvektor x kann jeweils nach erfolgter Messung ebenfalls normiert werden. Im Folgenden soll deshalb angenommen werden, dass sowohl der Steuerungsvektor als auch der Signalvektor normiert sind, womit sich die Gleichung weiter vereinfacht zu: ${q}^{2} \left(θ\right) = {\left|{{a}_{_}}^{H}\left(θ\right) {x}_{_}\right|}^{2}$

Der Vektor x kann geschrieben werden als ${x}_{_} = \left\{{xi}_{¯}\right\} , i = 1 … {N}_{tx}$

Darin sind xi die Vektoren, die die Messsignale angeben, die vom i-ten Sende-Antennenelement gesendet wurden und von den Nᵣₓ Empfangs-Antennenelementen empfangen wurden. Für eine (Einziel-) MIMO-Winkelschätzung mit allen Sende-Antennenelementen 14T erhält man dann die Gütefunktion ${q}^{2} \left(θ\right) = {\left|{{a}_{_}}^{H}\left(θ\right) {x}_{_}\right|}^{2} = {\left|{\sum }_{i} {a}_{tx , i} * \left(θ\right) {{{a}_{_}}_{rx}}^{H} \left(θ\right) {xi}_{¯}\right|}^{2}$

Darin läuft die Summe über alle Nₜₓ Sende-Antennenelemente (Summationsindex i), und a_{tx,i}*(θ) ist das komplex Konjugierte der einzelnen Komponente a_{tx,i}(θ)des Sende-Steuerungsvektors aₜₓ(θ). Die letzte Umformung in Gleichung (13) folgt aus Gleichung (2).

Definiert man nun Größen yᵢ(θ) als: ${y}_{i} \left(θ\right) = {{{a}_{_}}_{rx}}^{H} \left(θ\right) {xi}_{¯}$ so folgt aus Gleichung (13): ${q}^{2} \left(θ\right) = {\left|{\sum }_{i} {a}_{tx , i} * \left(θ\right) {y}_{i} \left(θ\right)\right|}^{2}$

Bei einer Einziel-SIMO-Winkelschätzung, die nur mit dem i-ten Sende-Antennenelement ausgeführt wird, erhält man (mit Normierung): ${q}^{2} = {\left|{y}_{i}\left(θ\right)\right|}^{2} / {\left|{xi}_{¯}\right|}^{2} .$

Anhand dieser Winkelgüte kann nun entschieden werden, ob bei der Winkelschätzung eine Einzielsituation oder eine Mehrzielsituation vorliegt. Bei der Mehrzielsituation wird die Gütefunktion einen deutlich kleineren Wert haben. Zur Entscheidung kann deshalb das Kriterium benutzt werden, dass die Gütefunktion bei dem geschätzten Winkel θ unterhalb eines geeignet gewählten Schwellenwertes liegt.

Wahlweise können jedoch auch andere Methoden und Kriterien herangezogen werden, um zwischen einer Einzielsituation und einer Mehrzielsituation zu unterscheiden.

Wenn man das Signalrauschen vernachlässigt, so gilt für den wahren Winkel θ näherungsweise: ${xi}_{¯} = s {a}_{tx , i} \left(θ\right) {{a}_{_}}_{rx} \left(θ\right)$ wobei s die komplexe Amplitude des vom Ziel emittierten Signals darstellt und θ der tatsächliche Winkel des Ziels ist.

Setzt man Gleichung (17) in Gleichung (14) ein, so erhält man: ${y}_{i} \left(θ\right) = {{{a}_{_}}_{rx}}^{H} \left(θ\right) s {a}_{tx , i} \left(θ\right) {{a}_{_}}_{rx} \left(θ\right)$

Da aᵣₓ(θ) normiert ist, vereinfacht sich dies zu ${y}_{i} \left(θ\right) = s {a}_{tx , i} \left(θ\right)$

Wenn man nun nacheinander SIMO-Messungen mit jedem der Sende-Antennenelemente 14T durchführt, erhält man Nₜₓ-Beziehungen der in Gleichung (19) angegebenen Art. Es lässt sich aber noch nicht unmittelbar überprüfen, ob und wie genau diese Beziehungen (19) erfüllt sind, da die Amplitude s nicht bekannt ist. Dieses Problem lässt sich jedoch dadurch umgehen, dass man die Vektoren auf der linken und der rechten Seite der Gleichung (19) jeweils durch eine einzelne ihrer Komponenten dividiert (ohne Einschränkung der Allgemeinheit durch die erste Komponente a_{tx,1}(θ) bzw. y₁(θ) ). Man erhält dann: ${a}_{tx , n} \left(θ\right) / {a}_{tx , 1} \left(θ\right) = {y}_{n} \left(θ\right) / {y}_{1} \left(θ\right)$

Die Größen auf der linken Seite der Gleichung (20) sind die Komponenten des relativen Sende-Steuerungsvektors aₜₓ'(θ). Die Größen auf der rechten Seite erhält man gemäß Gleichung (14) aus den Messergebnissen xi und dem bekannten, ursprünglich verwendeten Empfangs-Steuerungsvektor aᵣₓ(θ).

Eine Nachkalibrierung ist deshalb einfach Möglich, indem der bisher verwendete relative Sende-Steuerungsvektor aₜₓ'(θ) durch den Vektor mit den Komponenten yₙ(θ)/y₁(θ) ersetzt wird. Ebenso einfach kann anhand der Abweichung zwischen dem alten und dem neuen relativen Sende-Steuerungsvektor festestellt werden, wie stark das bisher verwendete Antennendiagramm verfälscht war.

Bei der oben beschriebenen Prozedur muss zunächst eine kohärente Summation (yᵢ(θ) = a^{H}ᵣₓ(θ) xi) ausgeführt werden und anschließend das Verhältnis yₙ(θ)/y₁(θ) gebildet werden. Im Allgemeinen entsteht jedoch nur ein tolerierbar kleiner Fehler, wenn man die Rechnung vereinfacht, indem man zunächst die Verhältnisse x_{n,k}/x_{1,k} berechnet und anschließend über alle k (d.h. über alle Empfangs-Antennenelemente) mittelt. Näherungsweise können deshalb anstelle von Gleichung (20) auch die folgenden Beziehungen verwendet werden: ${a}_{tx , n} \left(θ\right) / {a}_{tx , 1} \left(θ\right) = \left(1/{N}_{rx}\right) {\sum }_{k} \left({x}_{n , k}/{x}_{1 , k}\right)$

Darin ist x_{n,k} = (xn)ₖ = xⱼ , mit j = (k-1)Nₜₓ +n, die n-te Komponente des Teilvektors xn von x.

Im Kern umfasst das Verfahren somit die folgenden Schritte:
- Berechnen einer ersten, von den Komponenten des Sende-Steuerungsvektors aₜₓ(θ) abhängigen Vergleichsgröße (z. B. a_{tx,n}(θ)/a_{tx,1}(θ) ) für jedes Sende-Antennenelement (mit dem Index n),
- Berechnen einer zweiten, von den Ergebnissen der SIMO-Messungen abhängigen Vergleichsgröße (z. B. yₙ(θ)/y₁(θ) oder Σₖ (x_{n,k}/x_{1,k}) ) für jedes Sende- Antennenelement, und
- Korrigieren des Sende-Steuerungsvektors aₜₓ(θ) (oder äquivalent dazu des relativen Sende-Steuerungsvektors a'ₜₓ(θ) ) anhand einer bekannten Beziehung (Gleichung (20) oder (21) ) zwischen den ersten und zweiten Vergleichsgrößen für jedes Sende- Antennenelement.

Ein analoges Verfahren ermöglicht auch eine Kalibrierung oder Nachkalibrierung des Empfangs-Antennendiagramms, d.h. des Empfangs-Steuerungsvektors aᵣₓ.

An die Stelle der Gleichung (13) tritt dabei: ${q}^{2} \left(θ\right) = {\left|{\sum }_{i} {a}_{tx , i} * \left(θ\right) {{{a}_{_}}_{rx}}^{H} \left(θ\right) {xi}_{¯}\right|}^{2} = {\left|{{{a}_{_}}_{rx}}^{H}\left(θ\right){x ′}_{¯}\left(θ\right)\right|}^{2}$ mit ${x ′}_{¯} \left(θ\right) = {\sum }_{i} {a}_{tx , i} * \left(θ\right) {xi}_{¯}$ und analog zu Gleichung (12): ${x ′}_{¯} = \left\{{xn}_{¯}′\right\} , n = 1 … {N}_{rx}$

Bei einer Einziel-MISO-Winkelschätzung (Multiple Input Single Output), die nur mit dem n-ten Empfangs-Antennenelement ausgeführt wird, erhält man (mit Normierung): ${q}^{2} = {\left|{xn}_{¯}′\right|}^{2} / {\left({\sum }_{i} {\left|{xn}_{¯}{′}_{i}\right|}^{2}\right)}^{- 1 / 2}$

Wieder kann man anhand der Winkelgüte entscheiden, ob bei der Winkelschätzung eine Einzielsituation oder eine Mehrzielsituation vorliegt.

Wenn eine Einzielsituation vorliegt und man das Signalrauschen vernachlässigt, so gilt für den wahren Winkel θ näherungsweise: ${xi}_{¯} = s {a}_{tx , i} \left(θ\right) {{a}_{_}}_{rx} \left(θ\right)$

Eine Rechnung analog zu Gleichungen (18) bis (20) führ dann auf: ${a}_{rx , n} \left(θ\right) / {a}_{rx , 1} \left(θ\right) = x {′}_{n} \left(θ\right) / x {′}_{1} \left(θ\right)$

Die ersten Vergleichsgrößen sind in diesem Fall also die Komponenten a_{rx,n}(θ)/a_{rx,1}(θ) eines relativen Empfangs-Steuerungsvektors a"ᵣₓ (definiert analog zu Geleichung (6) ). Die zweiten Vergleichsgrößen, die nun von den Ergebnissen der MISO-Messungen abhängig sind, werden durch die Größen x'ₙ(θ)/x'₁(θ) für jedes Empfangs-Antennenelment (Index n) gebildet.

Als gute Näherung kann man auch in diesem Fall die Vergleichsgrößen und Beziehungen analog zu Gleichung (21) verwenden: ${a}_{rx , n} \left(θ\right) / {a}_{rx , 1} \left(θ\right) = \left(1/{N}_{tx}\right) {\sum }_{k} \left({x}_{k , n}/{x}_{k , 1}\right)$

Die oben beschriebenen Kalibrierungsprozeduren können analog auch für den Radarsensor 8 gemäß Fig. 1 ausgeführt werden. Die Kalibrierung der Subarrays innerhalb einer Domäne entspricht dabei exakt den oben beschriebenen Verfahren, wobei die Sende-Subarrays, beispielsweise TX1 und TX3 an die Stelle der Sende-Antennenelemente 14T treten, währenddessen bei den Empfangsantennen die Sub-Subarrays, beispielsweise RX1-RX4, an die Stelle der Empfangs-Antennenelemente 14R treten.

Es sind jedoch ebenso auch Kalibrierungsprozeduren möglich, bei denen die Grenzen zwischen den Domänen überschritten werden. Beispielsweise kann man auch das Antennendiagramm für die beiden Empfangs-Subarrays RS1 und RS2 kalibrieren. Der Empfangs-Steuerungsvektor hat dann acht Komponenten, je vier für jedes der beiden Sub-Arrays. Die MISO-Messungen werden dann für jedes der acht Sub-Subarrays RX1, RX8 ausgeführt, beispielsweise jeweils mit den vier Sende-Subarrays TX1-TX4. Die Messungen mit den Antennenkombinationen TX1, RX1-RX4 und TX3, RX1-RX4 liefern eine Kalibrierung für die Sub-Subarrays innerhalb der Domäne D1. Die Messungen mit den Antennenkombinationen TX2, RX1-RX4 und TX4, RX1-RX4 liefern eine Kalibrierung für dieselben Sub-Subarrays, jedoch werden diese beiden Kalibrierungen im Allgemeinen nicht überstimmen, da es sich bei den Messungen mit TX2 und TX4 auch ein Phasenoffset zwischen den Hochfrequenzbausteinen HF1 und HF2 bemerkbar machen kann. Entsprechendes gilt für die beiden möglichen Kalibrierungen der Sub-Subarrays RX5-RX8 in der Domäne D2. Allgemein wird der Phasenoffset zwischen den beiden Hochfrequenzbausteinen dazu führen, dass die korrigierten Empfangs-Steuerungsvektoren entweder in den ersten vier Komponenten oder in den letzten vier Komponenten voneinander abweichen, je nachdem, in welcher Domäne das verwendete Sende-Subarray liegt. Diese Abweichung lässt sich nun dazu nutzen, den Phasenoffset zwischen den Hochfrequenzbausteinen HF1 und HF2 zu bestimmen und auf dieser Grundlage eine Phasenkalibrierung der beiden Hochfrequenzbausteine vorzunehmen.

Das gleiche gilt sinngemäß für die Domänen D3 und D4 und die Kalibrierung der Hochfrequenzbausteine HF3 und HF4.

Die Kalibrierung der Hochfrequenzbausteine kann ebenso auch im Zuge einer Nachkalibrierung der Sende-Steuerungssektoren mit Hilfe von SIMO-Messungen erfolgen.

Durch Nachkalibrierung der Antennendiagramme für den Elevationswinkel ϕ lässt sich auf entsprechende Weise auch der Phasenoffset zwischen den Hochfrequenzbausteinen HF1 und HF3 sowie der Phasenoffset zwischen den Hochfrequenzbausteinen HF2 und HF4 bestimmen, so dass letztlich eine Phasenkalibrierung für alle vier Hochfrequenzbausteine erreicht wird.

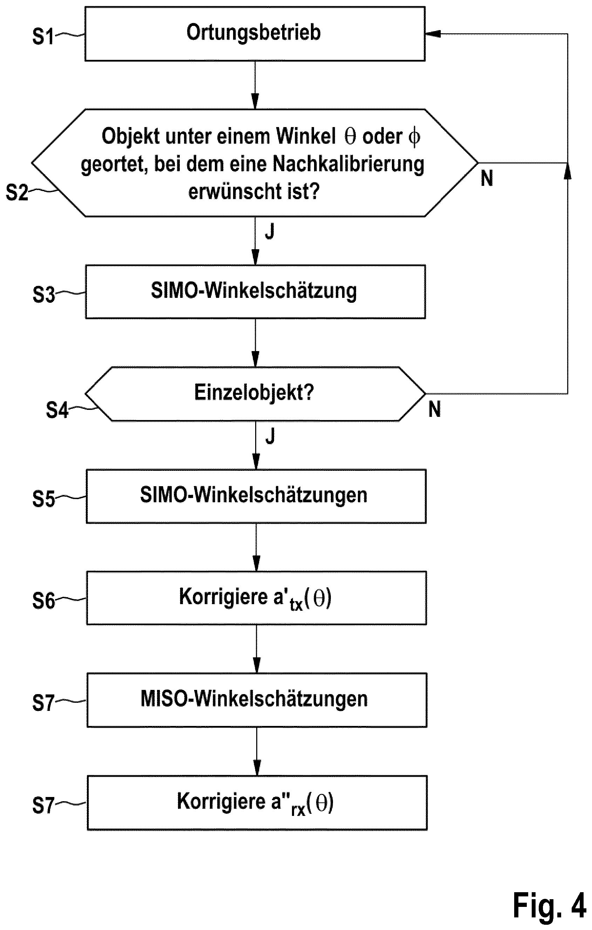

In Fig. 4 ist eine komplette Kalibrierungsprozedur dargestellt, die während einer Fahrt mit dem Kraftfahrzeug ausgeführt werden kann, das den Radarsensor 8 aufweist.

In Schritt S1 wird zunächst der normale Ortungsbetrieb durchgeführt, d.h., Objekte im Umfeld des Fahrzeugs werden mit Hilfe des Radarsensors 8 geortet. Dabei werden für die georteten Objekte Mehrziel-Winkelschätzungen auf der Grundlage der Antennendiagramme (im Azimut und in Elevation) durchgeführt, die ursprünglich bei Inbetriebnahme des Radarsensors vermessen wurden oder bei vorausgegangenen Nachkalibrierungsprozeduren neu kalibriert wurden.

In Schritt S2 wird geprüft, ob im aktuellen Ortungszyklus ein Objekt bei einem Azimutwinkel θ und/oder bei einem Elevationswinkel ϕ geortet wurde, für den noch keine Nachkalibrierung stattgefunden hat oder die letzte Nachkalibrierung bereits eine gewisse Zeit zurückliegt.

Wenn das der Fall ist (J), wird in Schritt S3 eine SIMO-Messung und Winkelschätzung für den Azimut- oder Elevationswinkel mit einem der Sende-Subarrays TX1 - TX4 ausgeführt. Andernfalls (N) erfolgt ein Rücksprung zu Schritt S1, und die Schleife mit den Schritten S1 und S2 wird so lange durchlaufen, bis ein Objekt unter einem Winkel gefunden wird, für den eine Nachkalibrierung stattfinden soll.

Anhand der Winkelgüte bei der in Schritt S3 durchgeführten SIMO-Winkelschätzung wird in Schritt S4 entschieden, ob es sich bei dem unter dem Winkel θ bzw. ϕ georteten Objekt um ein Einzelobjekt handelt oder nicht.

Wenn es kein Einzelobjekt ist (N), erfolgt wieder ein Rücksprung in die Schleife mit den Schritten S1 und S2. Wenn es sich um ein Einzelobjekt handelt (J), werden in Schritt S5 weitere SIMO-Messungen mit allen Sende-Subarrays TX1 - TX4 vorgenommen. Auf diese Weise erhält man einen kompletten Satz der Größen yᵢ(θ) für alle Sende-Subarrays. Anhand der daraus gebildeten Vergleichsgrößen wird dann in Schritt S6 der (relative) Sende-Steuerungssektor a'ₜₓ(θ) korrigiert (neu kalibriert).

Wahlweise kann sich noch ein Schritt S7 anschließen, in dem für dasselbe Objekt MISO-Messungen mit sämtlichen Sub-Subarrays der Empfangs-Subarray RX1 - RX16 durchgeführt werden. Auf der Grundlage dieser Messungen wird dann in Schritt S8 auch der (relative) Empfangs-Steuerungsvektor a"ᵣₓ(θ) korrigiert.

Sofern das Zeitmultiplex-Verfahren verwendet wird, sollten die zeitlichen Abstände zwischen den einzelnen SIMO-Messungen bzw. MISO-Messungen nicht zu groß sein, damit Fehler, die durch etwaige Ortsverlagerungen des Objektes in der zwischen den Messungen vergangenen Zeit nicht zu einem signifikanten Fehler führen. Es ist jedoch möglich, die Messungen zeitlich so zu verschachteln und/oder die Messergebnisse so zu kombinieren, dass sich die durch den Zeitversatz verursachten Fehler herausmitteln. Ein Beispiel für ein solches Verfahren ist in DE 10 2013 209 708 A1 beschrieben.

Eine analoge Verfeinerung gibt es auch beim Frequenzmultiplex-Verfahren, da hier der Abstand des Ziels in Verbindung mit dem Frequenzversatz zwischen den Sende-Antennenelementen zu einer Phasendifferenz zwischen den Grüßen yᵢ(θ) führen kann, die gegebenenfalls kompensiert werden muss.

## Patentansprüche

1. Verfahren zur Phasenkalibrierung eines MIMO-Radarsensors (8) mit einem Array (10) aus mehreren Sende- und Empfangs-Antennenelementen (14) die in mindestens einer Richtung (y, z) gegeneinander versetzt sind, und mit mehreren Hochfrequenzbausteinen (HF1 - HF4), die jeweils einem Teil (D1 - D4) des Arrays (10) zugeordnet sind, wobei die Phasenkalibrierung eine Korrektur von Phasendiffernzen der Hochfrequenzbausteine einschließt,
**dadurch gekennzeichnet dass** das Array (10) so in Sende-Subarrays (TX1 - TX8) und Empfangs-Subarrays (RS1 - RS4) unterteilt wird, dass jedes Subarray genau einem der Hochfrequenzbausteine zugeordnet ist und mindestens zwei Empfangs-Subarrays (RS1, RS2; RS3, RS4), die zu verschiedenen Hochfrequenzbausteinen gehören, in der mindestens einen Richtung (y, z) gegeneinander versetzt und in der dazu senkrechten Richtung (z,y)miteinander ausgerichtet sind, und dass das Verfahren mindestens eine Kalibrierungsroutine mit den folgenden Schritten umfasst:
vor Inbetriebnahme des Radarsensors:
- Speichern eines Antennendiagramms, das jedem von mehreren Winkeln θ einen jeweiligen Steuerungsvektor aₛ(θ) zuordnet, der sich zusammensetzt aus einem Sende-Steuerungsvektor aₛₜₓ(θ) und einem Empfangs-Steuerungsvektor aₛᵣₓ(θ), wobei der Steuerungsvektor mindestens je eine Komponente für jedes Subarray hat,
nach Inbetriebnahme:
- Ausführen einer Radarmessung zur Ortung eines Objekts (18),
- Prüfen, ob das geortete Objekt ein Einzelziel oder ein Mehrfachziel ist, und,
- wenn es ein Einzelziel ist:
- Ausführen einer MISO-Messung mit jedem der mindestens
zwei Empfangs-Subarrays (RS1, RS2; RS3, RS4), wobei die MISO-Messung für ein Empfangs-Subarray jeweils auch eine Messung mit einem Sende-Subarray einschließt, das einem anderen Hochfrequenzbaustein zugeordnet ist,
- Schätzen des Winkels θ des Objekts anhand der Messergebnisse,
- Berechnen einer ersten, von den Komponenten des Empfangs-Steuerungsvektors aₛᵣₓ(θ) abhängigen Vergleichsgröße für jedes der mindestens zwei Empfangs-Subarrays (RS1, RS2; RS3, RS4),
- Berechnen einer zweiten, von den Ergebnissen der MISO-Messungen abhängigen Vergleichsgröße für jedes der mindestens zwei Empfangs-Subarrays (RS1, RS2; RS3, RS4), und
- Korrigieren des Empfangs-Steuerungsvektors aₛᵣₓ(θ) anhand einer bekannten Beziehung zwischen den ersten und zweiten Vergleichsgrößen für die betreffenden Empfangs-Subarrays (RS1, RS2; RS3, RS4).

2. Verfahren nach Anspruch 1,
**dadurch gekennzeichnet dass** die mindestens eine Kalibrierungsroutine die folgenden weiteren Schritte umfasst, die nach Inbetriebnahme des Radarsensors ausgeführt werden:
- wenn das geortete Objekt ein Einzelziel ist:
- Ausführen einer SIMO-Messung mit jedem Sende-
Subarray, wobei die SIMO-Messung für ein Sende-Subarray jeweils auch eine Messung mit einem Empfangs-Subarray einschließt, das einem anderen Hochfrequenzbaustein zugeordnet ist,
- Schätzen des Winkels θ des Objekts anhand der Messergebnisse,
- Berechnen einer dritten, von den Komponenten des Sende-Steuerungsvektors aₛₜₓ(θ) abhängigen Vergleichsgröße für jedes der mindestens zwei Sende-Subarrays (TX1, TX2; TX3, TX4),
- Berechnen einer vierten, von den Ergebnissen der SIMO-Messungen abhängigen Vergleichsgröße für jedes der mindestens zwei Sende-Subarrays (TX1, TX2; TX3, TX4), und
- Korrigieren des Sende-Steuerungsvektors aₛₜₓ(θ) anhand einer bekannten Beziehung zwischen den dritten und vierten Vergleichsgrößen für die betreffenden Sende-Subarrays (TX1, TX2; TX3, TX4).

3. Verfahren zur Phasenkalibrierung eines MIMO-Radarsensors (8) mit einem Array (10) aus mehreren Sende- und Empfangs-Antennenelementen (14) die in mindestens einer Richtung (y, z) gegeneinander versetzt sind, und mit mehreren Hochfrequenzbausteinen (HF1 - HF4), die jeweils einem Teil (D1 - D4) des Arrays (10) zugeordnet sind, wobei die Phasenkalibrierung eine Korrektur von Phasendiffernzen der Hochfrequenzbausteine einschließt,
**dadurch gekennzeichnet dass** das Array so in Sende-Subarrays (TX1 - TX8) und Empfangs-Subarrays (RS1 -RS4) unterteilt wird, dass jedes Subarray genau einem der Hochfrequenzbausteine (HF1 - HF4) zugeordnet ist und mindestens zwei Sende-Subarrays (TX1, TX2; TX3, TX4), die zu verschiedenen Hochfrequenzbausteinen gehören, in der mindestens einen Richtung (y, z) gegeneinander versetzt und in der dazu senkrechten Richtung (z, y) miteinander ausgerichtet sind, und dass das Verfahren mindestens eine Kalibrierungsroutine mit den folgenden Schritten umfasst:
vor Inbetriebnahme des Radarsensors:
- Speichern eines Antennendiagramms, das jedem von mehreren Winkeln θ einen jeweiligen Steuerungsvektor aₛ(θ) zuordnet, der sich zusammensetzt aus einem Sende-Steuerungsvektor aₛₜₓ(θ) und einem Empfangs-Steuerungsvektor aₛᵣₓ(θ), wobei der Steuerungsvektor mindestens je eine Komponente für jedes Subarray hat,
nach Inbetriebnahme:
- Ausführen einer Radarmessung zur Ortung eines Objekts (18),
- Prüfen, ob das geortete Objekt ein Einzelziel oder ein Mehrfachziel ist, und,
- wenn es ein Einzelziel ist:
- Ausführen einer SIMO-Messung mit jedem Sende-Subarray, wobei die SIMO-Messung für ein Sende-Subarray jeweils auch eine Messung mit einem Empfangs-Subarray einschließt, das einem anderen Hochfrequenzbaustein zugeordnet ist,
- Schätzen des Winkels θ des Objekts anhand der Messergebnisse,
- Berechnen einer ersten, von den Komponenten des Sende-Steuerungsvektors aₛₜₓ(θ) abhängigen Vergleichsgröße für jedes der mindestens zwei Sende-Subarrays (TX1, TX2; TX3, TX4),
- Berechnen einer zweiten, von den Ergebnissen der SIMO-Messungen abhängigen Vergleichsgröße für jedes der mindestens zwei Sende-Subarrays (TX1, TX2; TX3, TX4), und
- Korrigieren des Sende-Steuerungsvektors aₛₜₓ(θ) anhand einer bekannten Beziehung zwischen den ersten und zweiten Vergleichsgrößen für die betreffenden Sende-Subarrays (TX1, TX2; TX3, TX4).

4. Verfahren nach einem der vorstehenden Ansprüche, für einen Radarsensor mit mindestens drei Hochfrequenzbausteinen (HF1-HF4), bei dem das Array (10) so in Sende-Subarrays (TX1-TX8) und Empfangs-Subarrays (RS1-RS4) unterteilt wird, dass mindestens zwei Sub-Arrays RS1, RS2, die zu einem ersten (HF1) und einem zweiten Hochfrequenzbaustein (HF2) gehören, in der Horizontalen versetzt zueinander angeordnet sind und mindestens ein weiteres Subarray (TX5-TX8), das zu einem dritten Hochfrequenzbaustein (HF3, HF4) gehört, in der Vertikalen versetzt zu den beiden ersten Subarrays angeordnet ist, und bei dem für eine Phasenkalibrierung des ersten und zweiten Hochfrequenzbausteins (HF1, HF2) eine Winkelschätzung im Azimut durchgeführt wird und für eine Phasenkalibrierung des dritten Hochfrequenzbausteins (HF3, HF4) eine Winkelschätzung in Elevation durchgeführt wird.

5. MIMO-Radarsensor (8) mit einem Array (10) aus mehreren Sende- und Empfangsantennenelementen (14), die in mindestens einer Richtung (y, z) gegeneinander versetzt sind, und mit mehreren Hochfrequenzbausteinen (HF1-HF4), die jeweils einem Teil (D1-D4) des Arrays zugeordnet sind, sowie mit einer Auswerte- und Steuerschaltung (16) für die Hochfrequenzbausteine, **dadurch gekennzeichnet, dass** die Auswerte- und Steuerungsschaltung für die Ausführung eines Verfahrens nach einem der Ansprüche 1 bis 4 ausgebildet ist.

## Claims

1. Method for phase calibration of a MIMO radar sensor (8) having an array (10) composed of multiple transmitting and receiving antenna elements (14) offset with respect to one another in at least one direction (y, z), and having multiple high-frequency modules (HF1 - HF4), each of which is associated with a part (D1 - D4) of the array (10), the phase calibration including a correction of phase differences of the high-frequency modules,
**characterized in that** the array (10) is subdivided into transmitting subarrays (TX1 - TX8) and receiving subarrays (RS1 - RS4) in such a way that each subarray is associated with exactly one of the high-frequency modules and at least two receiving subarrays (RS1, RS2; RS3, RS4) belonging to different high-frequency modules are offset with respect to one another in the at least one direction (y, z) and are aligned with one another in the direction (z, y) perpendicular thereto, and **in that** the method comprises at least one calibration routine having the following steps:
before start-up of the radar sensor:
- storing an antenna pattern which assigns to each of multiple angles θ a respective control vector aₛ(θ) composed of a transmission control vector aₛₜₓ(θ) and a reception control vector aₛᵣₓ(θ), the control vector having at least one component for each subarray,
after start-up:
- carrying out a radar measurement for locating an object (18),
- checking whether the located object is a single target or a multiple target, and,
- if it is a single target:
- carrying out a MISO measurement with each of the at least two receiving subarrays (RS1, RS2; RS3, RS4), each MISO measurement for a receiving subarray also including a measurement with a transmitting subarray associated with another high-frequency module,
- estimating the angle θ of the object on the basis of the measurement results,
- calculating a first comparison variable, which is dependent on the components of the reception control vector aₛᵣₓ(θ), for each of the at least two receiving subarrays (RS1, RS2; RS3, RS4),
- calculating a second comparison variable, which is dependent on the results of the MISO measurements, for each of the at least two receiving subarrays (RS1, RS2; RS3, RS4), and
- correcting the reception control vector aₛᵣₓ(θ) on the basis of a known relationship between the first and second comparison variables for the relevant receiving subarrays (RS1, RS2; RS3, RS4).

2. Method according to Claim 1,
**characterized in that** the at least one calibration routine comprises the following further steps, which are carried out after start-up of the radar sensor:
- if the located object is a single target:
- carrying out a SIMO measurement with each transmitting subarray, each SIMO measurement for a transmitting subarray also including a measurement with a receiving subarray associated with another high-frequency module,
- estimating the angle θ of the object on the basis of the measurement results,
- calculating a third comparison variable, which is dependent on the components of the transmission control vector aₛₜₓ(θ), for each of the at least two transmitting subarrays (TX1, TX2; TX3, TX4),
- calculating a fourth comparison variable, which is dependent on the results of the SIMO measurements, for each of the at least two transmitting subarrays (TX1, TX2; TX3, TX4), and
- correcting the transmission control vector aₛₜₓ(θ) on the basis of a known relationship between the third and fourth comparison variables for the relevant transmitting subarrays (TX1, TX2; TX3, TX4).

3. Method for phase calibration of a MIMO radar sensor (8) having an array (10) composed of multiple transmitting and receiving antenna elements (14) offset with respect to one another in at least one direction (y, z), and having multiple high-frequency modules (HF1 - HF4), each of which is associated with a part (D1 - D4) of the array (10), the phase calibration including a correction of phase differences of the high-frequency modules,
**characterized in that** the array is subdivided into transmitting subarrays (TX1 - TX8) and receiving subarrays (RS1 - RS4) in such a way that each subarray is associated with exactly one of the high-frequency modules (HF1 - HF4) and at least two transmitting subarrays (TX1, TX2; TX3, TX4) belonging to different high-frequency modules are offset with respect to one another in the at least one direction (y, z) and are aligned with one another in the direction (z, y) perpendicular thereto, and **in that** the method comprises at least one calibration routine having the following steps:
before start-up of the radar sensor:
- storing an antenna pattern which assigns to each of multiple angles θ a respective control vector aₛ(θ) composed of a transmission control vector aₛₜₓ(θ) and a reception control vector aₛᵣₓ(θ), the control vector having at least one component for each subarray,
after start-up:
- carrying out a radar measurement for locating an object (18),
- checking whether the located object is a single target or a multiple target, and,
- if it is a single target:
- carrying out a SIMO measurement with each transmitting subarray, each SIMO measurement for a transmitting subarray also including a measurement with a receiving subarray associated with another high-frequency module,
- estimating the angle θ of the object on the basis of the measurement results,
- calculating a first comparison variable, which is dependent on the components of the transmission control vector aₛₜₓ(θ), for each of the at least two transmitting subarrays (TX1, TX2; TX3, TX4),
- calculating a second comparison variable, which is dependent on the results of the SIMO measurements, for each of the at least two transmitting subarrays (TX1, TX2; TX3, TX4), and
- correcting the transmission control vector aₛₜₓ(θ) on the basis of a known relationship between the first and second comparison variables for the relevant transmitting subarrays (TX1, TX2; TX3, TX4).

4. Method according to one of the preceding claims, for a radar sensor having at least three high-frequency modules (HF1-HF4), in which the array (10) is subdivided into transmitting subarrays (TX1-TX8) and receiving subarrays (RS1-RS4) in such a way that at least two subarrays RS1, RS2 belonging to a first (HF1) and a second (HF2) high-frequency module are arranged horizontally offset from one another and at least one further subarray (TX5-TX8) belonging to a third high-frequency module (HF3, HF4) is arranged vertically offset from the first two subarrays, and in which an azimuth angle estimation is performed for a phase calibration of the first and second high-frequency modules (HF1, HF2) and an elevation angle estimation is performed for a phase calibration of the third high-frequency module (HF3, HF4).

5. MIMO radar sensor (8) having an array (10) composed of multiple transmitting and receiving antenna elements (14) offset with respect to one another in at least one direction (y, z), and having multiple high-frequency modules (HF1-HF4), each of which is associated with a part (D1-D4) of the array, and having an evaluation and control circuit (16) for the high-frequency modules, **characterized in that** the evaluation and control circuit is designed to carry out a method according to one of Claims 1 to 4.

## Revendications

1. Procédé d'étalonnage de phase d'un capteur radar MIMO (8) comprenant un réseau (10) composé de plusieurs éléments d'antenne d'émission et de réception (14) décalés les uns par rapport aux autres dans au moins une direction (y, z), et comprenant plusieurs modules haute fréquence (HF1 - HF4), qui sont respectivement associés à une partie (D1 - D4) du réseau (10), l'étalonnage de phase comprenant une correction des différences de phase des modules haute fréquence,
**caractérisé en ce que** le réseau (10) est subdivisé en sous-réseaux d'émission (TX1 - TX8) et en sous-réseaux de réception (RS1 - RS4), de telle sorte que chaque sous-réseau est associé à exactement l'un des modules haute fréquence et **en ce qu'**au moins deux sous-réseaux de réception (RS1, RS2 ; RS3, RS4) appartenant à différents modules haute fréquence sont décalés les uns par rapport aux autres dans au moins une direction (y, z) et sont alignés les uns par rapport aux autres dans la direction (z, y) perpendiculaire à celle-ci, et **en ce que** le procédé comprend au moins une routine d'étalonnage comprenant les étapes suivantes :
avant la mise en service du capteur radar :
- mise en mémoire d'un diagramme d'antenne qui associe à chacun de plusieurs angles θ un vecteur de commande aₛ(θ) correspondant, lequel se compose d'un vecteur de commande d'émission aₛₜₓ(θ) et d'un vecteur de commande de réception aₛᵣₓ(θ), le vecteur de commande ayant au moins une composante pour chaque sous-réseau,
après la mise en service :
- exécution d'une mesure au radar en vue de localiser un objet (18),
- contrôle si l'objet localisé est une cible unique ou une cible multiple et,
- s'il s'agit d'une cible unique :
- exécution d'une mesure MISO avec chacun des au moins deux sous-réseaux de réception (RS1, RS2 ; RS3, RS4), la mesure MISO pour un sous-réseau de réception comprenant aussi respectivement une mesure avec un sous-réseau d'émission qui est associé à un autre module haute fréquence,
- estimation de l'angle θ de l'objet au moyen des résultats de mesure,
- calcul d'une première grandeur comparative pour chacun des au moins deux sous-réseaux de réception (RS1, RS2 ; RS3, RS4), laquelle est dépendante des composantes du vecteur de commande de réception aₛᵣₓ(θ),
- calcul d'une deuxième grandeur comparative pour chacun des au moins deux sous-réseaux de réception (RS1, RS2 ; RS3, RS4), laquelle est dépendante des résultats de mesure MISO, et
- correction du vecteur de commande de réception aₛᵣₓ(θ) au moyen d'une relation connue entre les première et deuxième grandeurs comparatives pour les sous-réseaux de réception concernés (RS1, RS2 ; RS3, RS4).

2. Procédé selon la revendication 1,
**caractérisé en ce que** l'au moins une routine d'étalonnage comprend les étapes supplémentaires suivantes, qui sont exécutées après la mise en service du capteur radar :
- si l'objet localisé est une cible unique :
- exécution d'une mesure SIMO avec chaque sous-réseau d'émission, la mesure SIMO pour un sous-réseau d'émission comprenant aussi respectivement une mesure avec un sous-réseau de réception, lequel est associé à un autre module haute fréquence,
- estimation de l'angle θ de l'objet au moyen des résultats de mesure,
- calcul d'une troisième grandeur comparative pour chacun des au moins deux sous-réseaux d'émission (TX1, TX2 ; TX3, TX4), laquelle est dépendante des composantes du vecteur de commande d'émission aₛₜₓ(θ),
- calcul d'une quatrième grandeur comparative pour chacun des au moins deux sous-réseaux d'émission (TX1, TX2 ; TX3, TX4), laquelle est dépendante des résultats de mesure SIMO, et
- correction du vecteur de commande d'émission aₛₜₓ(θ) au moyen d'une relation connue entre les troisième et quatrième grandeurs comparatives pour les sous-réseaux d'émission concernés (TX1, TX2 ; TX3, TX4).

3. Procédé d'étalonnage de phase d'un capteur radar MIMO (8) comprenant un réseau (10) composé de plusieurs éléments d'antenne d'émission et de réception (14) décalés les uns par rapport aux autres dans au moins une direction (y, z), et comprenant plusieurs modules haute fréquence (HF1 - HF4), qui sont respectivement associés à une partie (D1 - D4) du réseau (10), l'étalonnage de phase comprenant une correction des différences de phase des modules haute fréquence,
**caractérisé en ce que** le réseau est subdivisé en sous-réseaux d'émission (TX1 - TX8) et en sous-réseaux de réception (RS1 - RS4), de telle sorte que chaque sous-réseau est associé à exactement l'un des modules haute fréquence (HF1 - HF4) et **en ce qu'**au moins deux sous-réseaux d'émission (TX1, TX2 ; TX3, TX4) appartenant à différents modules haute fréquence sont décalés les uns par rapport aux autres dans au moins une direction (y, z) et sont alignés les uns par rapport aux autres dans la direction (z, y) perpendiculaire à celle-ci, et **en ce que** le procédé comprend au moins une routine d'étalonnage comprenant les étapes suivantes :
avant la mise en service du capteur radar :
- mise en mémoire d'un diagramme d'antenne qui associe à chacun de plusieurs angles θ un vecteur de commande aₛ(θ) correspondant, lequel se compose d'un vecteur de commande d'émission aₛₜₓ(θ) et d'un vecteur de commande de réception aₛᵣₓ(θ), le vecteur de commande ayant au moins une composante pour chaque sous-réseau,
après la mise en service :
- exécution d'une mesure au radar en vue de localiser un objet (18),
- contrôle si l'objet localisé est une cible unique ou une cible multiple et,
- s'il s'agit d'une cible unique :
- exécution d'une mesure SIMO avec chaque sous-réseau d'émission, la mesure SIMO pour un sous-réseau d'émission comprenant aussi respectivement une mesure avec un sous-réseau de réception, lequel est associé à un autre module haute fréquence,
- estimation de l'angle θ de l'objet au moyen des résultats de mesure,
- calcul d'une première grandeur comparative pour chacun des au moins deux sous-réseaux d'émission (TX1, TX2 ; TX3, TX4), laquelle est dépendante des composantes du vecteur de commande d'émission aₛₜₓ(θ),
- calcul d'une deuxième grandeur comparative pour chacun des au moins deux sous-réseaux d'émission (TX1, TX2 ; TX3, TX4), laquelle est dépendante des résultats de mesure SIMO, et
- correction du vecteur de commande d'émission aₛₜₓ(θ) au moyen d'une relation connue entre les première et deuxième grandeurs comparatives pour les sous-réseaux d'émission concernés (TX1, TX2 ; TX3, TX4).

4. Procédé selon l'une des revendications précédentes, pour un capteur radar comportant au moins trois modules haute fréquence (HF1 - HF4), avec lequel le réseau (10) est subdivisé en sous-réseaux d'émission (TX1-TX8) et en sous-réseaux de réception (RS1-RS4) de telle sorte qu'au moins deux sous-réseaux RS1, RS2 appartenant à un premier (HF1) et à un deuxième module haute fréquence (HF2) soient décalés l'un par rapport à l'autre horizontalement et qu'au moins un autre sous-réseau (TX5-TX8) appartenant à un troisième module haute fréquence (HF3, HF4) soit décalé verticalement par rapport aux deux premiers sous-réseaux, et avec lequel une estimation de l'angle d'azimut est effectuée pour un étalonnage de phase des premier et deuxième modules haute fréquence (HF1, HF2) et une estimation de l'angle d'élévation est effectuée pour un étalonnage de phase du troisième module haute fréquence (HF3, HF4).

5. Capteur radar MIMO (8) comprenant un réseau (10) composé de plusieurs éléments d'antenne d'émission et de réception (14) décalés les uns par rapport aux autres dans au moins une direction (y, z), et comprenant plusieurs modules haute fréquence (HF1 - HF4) associés respectivement à une partie (D1 - D4) du réseau, et comprenant également un circuit d'évaluation et de commande (16) pour les modules haute fréquence, **caractérisé en ce que** le circuit d'évaluation et de commande est conçu pour la mise en œuvre d'un procédé selon l'une des revendications 1 à 4.
